# EUROPEAN PATENT APPLICATION

(11) **EP 4 797 751 A1**
(43) Date of publication of application: **26.08.2026**
(21) Application number: 24890411.2
(22) Date of filing: 16.10.2024
(51) Int. Cl.: H04W 12/03

(54) **COMMUNICATION METHOD AND DEVICE**

(30) Priority: 16.11.2023 CN 202311531917
(71) Applicant: HUAWEI TECHNOLOGIES CO., LTD., Shenzhen 518129 (CN)
(72) Inventor: QU, Weilin, Shenzhen, Guangdong 518129 (CN); WU, Yiling, Shenzhen, Guangdong 518129 (CN); LUO, Zhihu, Shenzhen, Guangdong 518129 (CN); JIN, Zhe, Shenzhen, Guangdong 518129 (CN)
(74) Representative: Goddar, Heinz J.
(86) International application number: PCT/CN2024/125102
(87) International publication number: WO 2025/103053

(57) **Abstract**

This application relates to the field of communication technologies, and provides a communication method and apparatus. The method includes: sending a first sequence to a first apparatus, where the first sequence is used to identify a second apparatus, and the second apparatus is a sending end of the first sequence; receiving first information from the first apparatus, where the first information includes the first sequence, and the first information is used to determine that the first apparatus successfully receives the first sequence; scrambling a to-be-sent data sequence based on the first sequence, to generate a second sequence; and sending the second sequence to the first apparatus. According to the foregoing embodiments, the first sequence may be used as an identifier of the sending end in a random access scenario, or may be used to scramble the to-be-sent data sequence, and the sending end can implement data scrambling without needing additional storage space. Therefore, according to the method provided in embodiments of this application, scrambling complexity is reduced, and a receiving end can be prevented from misinterpreting data as being sent by another sending end.

## Description

This application claims priority to Chinese Patent Application No. 202311531917.X, filed with the China National Intellectual Property Administration on November 16, 2023 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

In a passive (passive) internet of things (internet of things, IoT) communication system, a sending end may scramble to-be-sent data at a physical layer. Different sending ends use different scrambling sequences in a scrambling process. In this way, a receiving end may descramble received data based on the scrambling sequence of each sending end. The receiving end can determine a sending end from which the received data comes, thereby avoiding data misinterpreting, that is, avoiding considering data of one sending end as data of another sending end. For example, the sending end may scramble bits on a data channel through a pseudo-random gold (gold) sequence. However, a gold sequence requires a large quantity of storage space and computing resources, and cannot be used for a system having low requirements on power consumption and complexity.

Therefore, how to reduce scrambling complexity is a problem to be urgently resolved.

### SUMMARY

This application provides a communication method and apparatus, to reduce scrambling complexity.

According to a first aspect, a method is provided. The method may be performed by a second apparatus, or may be performed by a component (for example, a processor, a chip, or a chip system) in the second apparatus, or may be performed by a logical module or software that can implement all or some functions of the second apparatus. The method includes: sending a first sequence to a first apparatus, where the first sequence is used to identify a second apparatus, and the second apparatus is a sending end of the first sequence; receiving first information from the first apparatus, where the first information includes the first sequence, and the first information is used to determine that the first apparatus successfully receives the first sequence; scrambling a to-be-sent data sequence based on the first sequence, to generate a second sequence; and sending the second sequence to the first apparatus.

According to the foregoing embodiments, the first sequence may be used as an identifier of the sending end in a random access scenario, or may be used to scramble the to-be-sent data sequence, and the sending end can implement data scrambling without needing additional storage space. Therefore, according to the method provided in embodiments of this application, scrambling complexity is reduced, and a receiving end can be prevented from misinterpreting data as being sent by another sending end.

With reference to the first aspect, in some implementations of the first aspect, the to-be-sent data sequence includes an information sequence and a check sequence of the information sequence, a quantity of bits of the check sequence is N, the second sequence includes the information sequence and a third sequence, and N is a positive integer, where the third sequence is obtained by scrambling the check sequence based on N bits corresponding to the first sequence.

According to the foregoing embodiment, the sending end may scramble only the to-be-sent check sequence based on the first sequence. Therefore, the method provided in embodiments of this application has low scrambling complexity, and the receiving end can be prevented from misinterpreting data as being sent by another sending end.

With reference to the first aspect, in some implementations of the first aspect, a quantity of bits of the to-be-sent data sequence is N, and N is a positive integer; and the second sequence is obtained by scrambling the to-be-sent data sequence based on N bits corresponding to the first sequence.

According to the foregoing embodiment, the sending end may scramble all the to-be-sent data sequences based on the first sequence, which complies with a data channel scrambling mechanism specified in a current protocol, and improves applicability of the method in embodiments of this application. In addition, the method provided in embodiments of this application has a good scrambling effect, and the receiving end can be further prevented from misinterpreting data as being sent by another sending end.

With reference to the first aspect, in some implementations of the first aspect, the N bits corresponding to the first sequence include first N bits of the first sequence, last N bits of the first sequence, first N bits of a sequence obtained after a plurality of first sequences are cascaded, or last N bits of the sequence obtained after the plurality of first sequences are cascaded.

According to the foregoing embodiment, the sending end may scramble all the to-be-sent data sequences or all the check sequences based on the first sequence. Therefore, the method provided in embodiments of this application has a good scrambling effect, and the receiving end can be further prevented from misinterpreting data as being sent by another sending end.

With reference to the first aspect, in some implementations of the first aspect, the to-be-sent data sequence includes an information sequence and a check sequence of the information sequence, a quantity of bits of the first sequence is M, a quantity of bits of the check sequence is greater than or equal to M, the second sequence includes the information sequence and a third sequence, and M is a positive integer; and the third sequence is obtained by scrambling M bits in the check sequence based on M bits of the first sequence.

According to the foregoing embodiment, the sending end may scramble some bits of the check sequence based on the first sequence, scrambling complexity is further reduced, and the receiving end can be prevented from misinterpreting data as being sent by another sending end.

With reference to the first aspect, in some implementations of the first aspect, a quantity of bits of the first sequence is M, the second sequence is obtained by respectively scrambling M subsequences based on M bits of the first sequence, the to-be-sent data sequence is divided into the M subsequences, and when an m^{th} bit in the M bits is 0, a NOT operation is performed on bits of an m^{th} subsequence in the M subsequences, M is a positive integer, and m=1, ..., M.

According to the foregoing embodiment, the sending end may scramble all the to-be-sent data sequences based on the first sequence, which complies with a data channel scrambling mechanism specified in a current protocol, and improves applicability of the method in embodiments of this application. In addition, according to the method provided in embodiments of this application, to-be-sent data sequences of various lengths can be quickly scrambled, which has a good scrambling effect, and the receiving end can be further prevented from misinterpreting data as being sent by another sending end.

According to a second aspect, a communication method is provided. The method may be performed by a first apparatus, or may be performed by a component (for example, a processor, a chip, or a chip system) in the first apparatus, or may be performed by a logical module or software that can implement all or some functions of the first apparatus. The method includes: receiving a first sequence from a second apparatus, where the first sequence is used to identify the second apparatus; sending first information to the second apparatus, where the first information includes the first sequence, and the first information is used to determine that a first apparatus successfully receives the first sequence; receiving a second sequence from the second apparatus; and descrambling the second sequence based on the first sequence, to obtain a target data sequence.

According to the foregoing embodiment, the first sequence may be used as an identifier of the sending end in a random access scenario, or may be used to scramble the received data sequence, and the receiving end can implement data descrambling without needing additional storage space. Therefore, according to the method provided in embodiments of this application, descrambling complexity is reduced, and the receiving end can be prevented from misinterpreting data as being sent by another sending end.

With reference to the second aspect, in some implementations of the second aspect, the target data sequence includes an information sequence and a check sequence of the information sequence, a quantity of bits of the check sequence is N, the second sequence includes the information sequence and a third sequence, and N is a positive integer; and the check sequence is obtained by descrambling the third sequence based on N bits corresponding to the first sequence.

According to the foregoing embodiment, the receiving end may descramble the received sequence based on the first sequence, to obtain the check sequence. Therefore, the method provided in embodiments of this application has low descrambling complexity, and the receiving end can be prevented from misinterpreting data as being sent by another sending end.

With reference to the second aspect, in some implementations of the second aspect, a quantity of bits of the target data sequence is N, and N is a positive integer; and the target data sequence is obtained by descrambling the second sequence based on N bits corresponding to the first sequence.

According to the foregoing embodiment, the receiving end may descramble the received sequence based on the first sequence, to obtain the target data sequence. Therefore, the method provided in embodiments of this application has a good descrambling effect, and the receiving end can be further prevented from misinterpreting data as being sent by another sending end.

With reference to the second aspect, in some implementations of the second aspect, the N bits corresponding to the first sequence include first N bits of the first sequence, last N bits of the first sequence, first N bits of a sequence obtained after a plurality of first sequences are cascaded, or last N bits of the sequence obtained after the plurality of first sequences are cascaded.

According to the foregoing embodiment, the receiving end may descramble the received sequence based on the first sequence, to obtain the target data sequence or the check sequence. Therefore, the method provided in embodiments of this application has a good descrambling effect, and the receiving end can be further prevented from misinterpreting data as being sent by another sending end.

With reference to the second aspect, in some implementations of the second aspect, the target data sequence includes an information sequence and a check sequence of the information sequence, a quantity of bits of the first sequence is M, a quantity of bits of the check sequence is greater than or equal to M, the second sequence includes the information sequence and a third sequence, and M is a positive integer, where the check sequence is obtained by descrambling M bits in the third sequence based on M bits of the first sequence.

According to the foregoing embodiment, the receiving end may descramble the received sequence based on the first sequence, to obtain the check sequence. The method provided in embodiments of this application has low descrambling complexity, and the receiving end can be prevented from misinterpreting data as being sent by another sending end.

With reference to the second aspect, in some implementations of the second aspect, a quantity of bits of the first sequence is M, the target data sequence is obtained by respectively descrambling M subsequences based on M bits of the first sequence, the second sequence is divided into the M subsequences, and when an m^{th} bit in the M bits is 0, a NOT operation is performed on bits of an m^{th} subsequence in the M subsequences, M is a positive integer, and m=1, ..., M.

According to the foregoing embodiment, the receiving end may descramble the received sequence based on the first sequence, to obtain the target data sequence. The method provided in embodiments of this application has a good descrambling effect, and the receiving end can be further prevented from misinterpreting data as being sent by another sending end.

According to a third aspect, a communication apparatus is provided, including a processor. The processor is configured to execute a computer program or instructions, or use a processing circuit, to cause the communication apparatus to perform the first aspect and any possible method of the first aspect, or cause the communication apparatus to perform the first aspect and any possible method of the second aspect.

In a possible implementation, the communication apparatus further includes a memory. The memory is configured to store the computer program or the instructions. Further, the processor is specifically configured to invoke and run the computer program or the computer instructions stored in the memory, to cause the processor to implement any one of the implementations of the first aspect or the second aspect.

In a possible implementation, the communication apparatus further includes a transceiver (which may also be referred to as a communication interface), and the transceiver is configured to input and/or output a signal through the communication interface. The processor is configured to control the transceiver to send and receive a signal.

According to a fourth aspect, a communication apparatus is provided, including a processing circuit (which may also be referred to as a processor) and an input/output interface (which may also be referred to as an interface circuit), where the input/output interface is configured to input and/or output a signal, and the processing circuit is configured to perform the first aspect and any possible method of the first aspect, or the processing circuit is configured to perform the second aspect and any possible method of the second aspect.

In a possible implementation, the processor is configured to communicate with another apparatus through the interface circuit, and perform any one of the implementations of the first aspect or any one of the implementations of the second aspect. There are one or more processors.

According to a fifth aspect, a communication apparatus is provided. The communication apparatus may be a first apparatus, or may be a device, a module, or the like configured to perform a function of the first apparatus. The communication apparatus may be a second apparatus, or may be a device, a module, or the like configured to perform a function of the second apparatus.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

In another possible implementation, the communication apparatus may include modules or units in one-to-one correspondence with the methods/operations/steps/actions described in the second aspect. The modules or units may be implemented by a hardware circuit, software, or a combination of a hardware circuit and software.

According to a sixth aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to a seventh aspect, a computer program product is provided. The computer program product includes a computer program or instructions. When the computer program or the instructions are run on a computer, the method in any one of the first aspect and the possible implementations of the first aspect is performed, or the method in any one of the second aspect and the possible implementations of the second aspect is performed.

According to an eighth aspect, a communication apparatus is provided. The communication apparatus includes a processor. The processor is configured to be connected to a memory, and configured to invoke a program stored in the memory, to perform any possible method in the first aspect or any possible method in the second aspect. The memory may be located inside the communication apparatus, or may be located outside the communication apparatus. In addition, there are one or more processors.

In an implementation, the communication apparatus in the foregoing third aspect, the fourth aspect, or the fifth aspect may be a chip or a chip system.

According to a ninth aspect, a chip apparatus is provided. The chip apparatus includes a processor, configured to invoke a computer program or computer instructions in a memory, to cause the processor to perform any one of the implementations of the first aspect or any one of the implementations of the second aspect.

Optionally, the processor is coupled to the memory through an interface.

According to a tenth aspect, a communication system is provided. The communication system includes a first apparatus and a second apparatus. The first apparatus is configured to perform the method in the second aspect, and the second apparatus is configured to perform the method in the first aspect.

According to an eleventh aspect, a communication method is provided. The method is applied to a first apparatus and a second apparatus. The method includes: performing, by the first apparatus, the method in the second aspect; and performing, by the second apparatus, the method in the first aspect.

For descriptions of beneficial effects of any one of the third aspect to the eleventh aspect, refer to descriptions of beneficial effects of the first aspect or the second aspect.

### BRIEF DESCRIPTION OF DRAWINGS

FIG. 1 is a diagram of an architecture of a communication system applied in an embodiment of this application;
FIG. 2 is a schematic flowchart of a communication method according to an embodiment of this application;
FIG. 3 is a schematic flowchart of another communication method according to an embodiment of this application;
FIG. 4 is a diagram of data scrambling according to an embodiment of this application;
FIG. 5 is a block diagram of a communication apparatus according to an embodiment of this application;
FIG. 6 is a block diagram of another communication apparatus according to an embodiment of this application; and
FIG. 7 is a block diagram of a communication system according to an embodiment of this application.

### DESCRIPTION OF EMBODIMENTS

The technical solutions in this application are to be described below with reference to the accompanying drawings.

The technical solutions provided in this application may be applied to various communication systems, such as a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation (6th Generation, 6G) mobile communication system. The technical solutions provided in this application may be further applied to device to device (device to device, D2D) communication, machine to machine (machine to machine, M2M) communication, machine type communication (machine type communication, MTC), an IoT communication system, an intelligent Internet of Things (artificial intelligence & internet of things, A-IoT), or another communication system. This is not limited in this application.

With development of communication technologies, a communication system not only supports conventional communication, but also supports, for example, vehicle to everything (vehicle to everything, V2X) communication (which may also be referred to as internet of vehicles communication), vehicle to vehicle (vehicle to vehicle, V2V) communication (which may also be referred to as vehicle to vehicle communication), vehicle to infrastructure (vehicle to infrastructure, V2I) communication (which may also be referred to as vehicle to infrastructure communication), vehicle to pedestrian (vehicle to pedestrian, V2P) communication (which may also be referred to as vehicle to pedestrian communication), and vehicle to network (vehicle to network, V2N) communication (which may also be referred to as vehicle to network communication). For example, the communication system may further support a next generation wireless local area network system.

A terminal device in embodiments of this application may be briefly referred to as a terminal. The terminal device may be a device having a wireless transceiver function. The terminal device may be mobile or fixed. The terminal device may be deployed on land, including indoor or outdoor, or handheld or vehicle-mounted; or may be deployed on a water surface (for example, on a ship, or the like); or may be deployed in the air (for example, on an airplane, a balloon, a satellite, or the like). The terminal device may include a mobile phone (mobile phone), a pad (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). The terminal device may further be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, a vehicle-mounted device, a wearable device, a terminal device in a 5G generation network, a terminal device in a future evolved public land mobile network (public land mobile network, PLMN), or the like. The terminal device sometimes may also be referred to as a user equipment (user equipment, UE), a mobile station (mobile station, MS), a mobile terminal (mobile terminal, MT), or the like. Optionally, the terminal device may communicate with a plurality of access network devices that use different technologies. For example, the terminal device may communicate with an access network device supporting LTE, may communicate with an access network device supporting 5G, or may be dual-connected to the access network device supporting LTE and the access network device supporting 5G. This is not limited in this application.

In addition, the terminal device may be an IoT device or an A-IoT device, for example, a passive (passive) terminal device, a semi-passive (semi-passive) terminal device, a passive A-IoT terminal device, or a semi-passive A-IoT terminal device. The terminal device may be a sensor, an electricity meter, a water meter, or the like. Alternatively, the terminal device may be an uncrewed aerial vehicle (unmanned aerial vehicle or uncrewed aerial vehicle, UAV) having a communication function. When the terminal device is passive or semi-passive, the terminal device may receive or send data by obtaining energy. The energy may be obtained through radio, solar energy, light energy, wind energy, water energy, heat energy, kinetic energy, and the like. A manner in which the passive terminal device or the semi-passive terminal device obtains the energy is not limited in this application. The terminal device may have a backscattering (backscatter) capability, and the terminal device having the backscattering capability may backscatter a carrier received by the terminal device. The terminal device may include an envelope detector receiver.

In this application, an apparatus configured to implement a function of the terminal device may be the terminal device, or may be an apparatus that can support the terminal device in implementing the function, for example, a chip system, a hardware circuit, a software module, or a combination of the hardware circuit and the software module. The apparatus may be mounted in the terminal device or may be used together with the terminal device. In the technical solutions provided in this application, the apparatus configured to implement a function of the terminal device is the terminal device. The technical solutions provided by this application may be described below by using an example in which the terminal device is the UE.

A network device may be a node or a device that connects the terminal device to a wireless network, or the network device is an entity configured to transmit or receive a signal on a network side. For example, the network device includes but is not limited to a base station, an access network (radio access network, RAN) device, a next generation node B (generation nodeB, gNB) in 5G, an evolved node B (evolved node B, eNB), a radio network controller (radio network controller, RNC), a node B (node B, NB), a base station controller (base station controller, BSC), a base transceiver station (base transceiver station, BTS), a home base station (for example, a home evolved nodeB, or a home node B, HNB), a base band unit (base band unit, BBU), a transmitting and receiving point (transmitting and receiving point, TRP), a transmitting point (transmitting point, TP), and/or a mobile switching center. Alternatively, the access network device may be at least one of a centralized unit (centralized unit, CU), a distributed unit (distributed unit, DU), a centralized unit control plane (CU control plane, CU-CP) node, a centralized unit user plane (CU user plane, CU-UP) node, an integrated access and backhaul (integrated access and backhaul, IAB), a radio controller in a cloud radio access network (cloud radio access network, CRAN) scenario, or the like. Alternatively, the network device may be a relay station, an access point, a vehicle-mounted device, a terminal device, a wearable device, a network device in a 5G network, a network device in a future evolved public land mobile network (public land mobile network, PLMN), or the like. The network device may be referred to as the base station below.

In this application, an apparatus configured to implement a function of the network device may be the network device, or may be an apparatus that can support the network device in implementing the function, for example, a chip system, a hardware circuit, a software module, or a combination of the hardware circuit and the software module. The apparatus may be mounted in the network device or may be used together with the network device. In the technical solutions provided in this application, the apparatus configured to implement a function of the network device may be the access network device. The technical solutions provided in this application may be described below by using an example in which the network device is the base station.

A reader (reader) may interact with the terminal device through a radio frequency signal or a radio signal. It should be understood that a name of the reader is not limited in this application. The name of the reader may still be used, and the reader may also have another name. For example, the reader may also be referred to as a reader, or a helper (helper). The reader has a function of performing some operations (for example, obtaining information of the passive terminal device, a stock taking operation, a read operation, a write operation, an invalidation operation, or another message interaction operation with the passive terminal device) on the terminal device (for example, the passive terminal device).

As some operation examples of the reader, the reader may send instructions from a server or an application function to the passive terminal device, or the reader may send a message from the passive terminal device to the server or the application function. The reader may obtain, based on instructions delivered by the server, information stored in a specified passive terminal device. For example, if the operation is the stock taking operation (or may be referred to as an inventory operation), the reader may obtain identification information of the passive terminal device, where the identification information may be a unique identifier of the passive terminal device, or may be a temporary identifier of the passive terminal device. For example, if the operation is the read operation, the reader may read data in a storage area of the passive terminal device. In some scenarios in which information stored in the passive terminal device needs to be rewritten, the reader may further have a write function. For example, if the operation is the write operation, the reader may write data into the storage area of the passive terminal device. In addition, the reader may further perform an invalidation operation on the passive terminal device. After the invalidation operation is performed, the passive terminal device is invalid, and cannot perform operations such as obtaining information about the passive terminal device, the stock taking operation, the read operation, a message interaction operation with the passive terminal device, or the write operation. In this application, the reader may be the terminal device, or may be the access network device, a pole station, a micro station, a small station, an eNodeB, a gNodeB, an integrated access and backhaul (integrated access and backhaul, IAB) node, or the like. A form of the reader is not limited in this application.

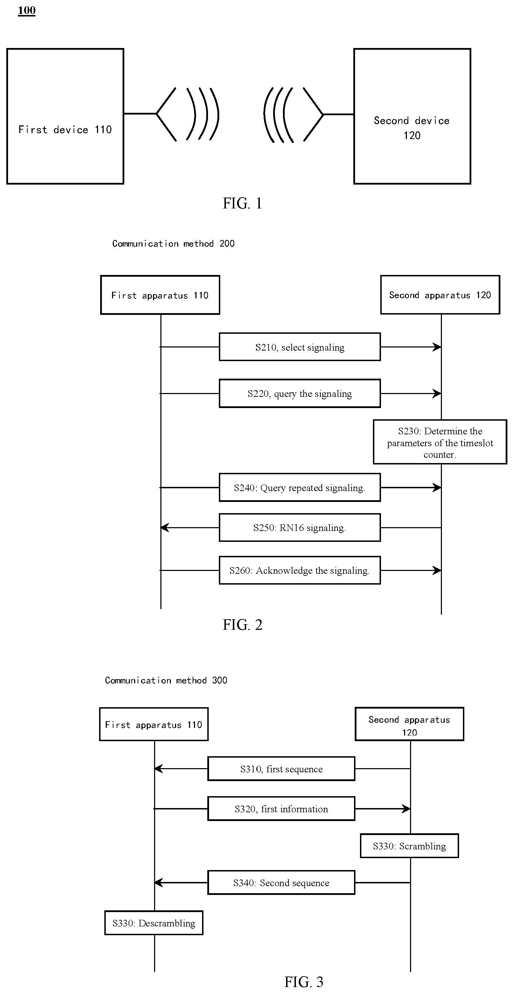

FIG. 1 is a diagram of an architecture of a communication system 100 applied in an embodiment of this application. The communication system 100 may be a radio frequency identification (radio frequency identification, RFID) system.

The system 100 may include a first apparatus 110 and a second apparatus 120. The first apparatus 110 and the second apparatus 120 may communicate with each other through a radio frequency (radio frequency, RF) signal.

A specific form of the first apparatus 110 is not limited in this application. The first apparatus 110 may be any entity that has a signal transmitting or receiving function. For example, the first apparatus 110 may include a network device, a reader, a helper, an NR terminal, or the like. A specific form of the second apparatus 120 is not limited in this application. For example, the second apparatus 120 may include a passive terminal device, a passive A-IoT terminal device, a semi-passive terminal device, a semi-passive A-IoT terminal device, or the like. The second apparatus 120 may alternatively be a tag (tag). Further, the second apparatus 120 may be an active tag or a passive tag. If the second apparatus 120 is the passive tag, that is, the second apparatus 120 itself does not have a power supply, the second apparatus 120 may obtain energy from the RF signal transmitted by the first apparatus.

FIG. 2 is a schematic flowchart of a communication method 200 according to an embodiment of this application. FIG. 2 relates to communication between a first apparatus 110 and a second apparatus 120. The second apparatus 120 may be passive. In this way, the first apparatus 110 may continuously send a signal including a high-level waveform to the second apparatus 120. After receiving the signal, the second apparatus 120 reflects information to the first apparatus 110 through a reverse link according to energy in the signal. The method 200 is described below with reference to FIG. 2.

S210: The first apparatus 110 sends selection (select) signaling to the second apparatus 120. Correspondingly, the second apparatus 120 receives the selection signaling from the first apparatus 110.

The selection signaling may carry a mask (mask) identification (identification, ID) or a tag ID of the second apparatus. Through the selection signaling, the first apparatus 110 may access the second apparatus 120 or a group where the second apparatus 120 is located.

The foregoing S210 may be considered as a selection process. Through the selection process, the first apparatus 110 may access a specific tag or tag group.

S220: The first apparatus 110 sends query (query) signaling to the second apparatus 120. Correspondingly, the second apparatus 120 receives the query signaling from the first apparatus 110.

S230: The second apparatus 120 determines a parameter of a timeslot counter based on the query signaling.

The query signaling may include a query parameter, and the second apparatus may determine the parameter of the timeslot counter based on the query parameter.

In some embodiments, the query parameter is Q, and the second apparatus may randomly extract a number from a range from 0 to 2^{Q-1} as the parameter of the timeslot counter. For example, if the query parameter is 3, the second apparatus may randomly extract a number from a range from 0 to 4. For example, if 2 is extracted, the parameter of the timeslot counter is 2. For another example, the query parameter is 4, and the second apparatus may randomly extract a number from a range from 0 to 8. For example, if 5 is extracted, the parameter of the timeslot counter is 5.

S240: The first apparatus 110 sends query repetition (query repetition, queryrep) signaling to the second apparatus 120. The second apparatus 120 receives the query repetition signaling from the first apparatus 110.

The query repetition signaling may repeat an operation of querying signaling without changing the parameter of the query signaling. The query repetition signaling may omit some parameters, to save signaling overheads. The second apparatus 120 may determine a parameter omitted in the query repetition signaling based on the query signaling received in S230.

It should be noted that the selection signaling, the query signaling, or the query repetition signaling may also be referred to as paging (paging) signaling, or may be referred to as group paging signaling.

S250: The second apparatus 120 determines, based on the parameter of the timeslot counter, to send RN16 signaling. Correspondingly, the first apparatus 110 receives the RN16 signaling from the second apparatus 120.

The RN16 signaling may include a sequence used to identify the second apparatus 120. The sequence may also be referred to as a preamble sequence used to identify the second apparatus 120, or a message (message, MSG) 1 sequence used to identify the second apparatus 120 during random access.

After receiving the query repetition signaling, the second apparatus 120 may determine whether to perform S250. When the parameter of the timeslot counter is not 0, the second apparatus 120 does not send the RN16 signaling to the first apparatus 110, and subtracts 1 from the parameter of the timeslot counter. When the parameter of the timeslot counter is 0, the second apparatus 120 sends the RN16 signaling to the first apparatus 110. In other words, a tag whose parameter is a non-0 value of the timeslot counter is in a waiting status after the query repetition signaling is received, and a tag whose parameter is a 0 value of the timeslot counter is in a response status after the query repetition signaling is received.

For example, the parameter of the timeslot counter set by the second apparatus 120 in S230 is 1. After the query repetition signaling is received for a first time, because the parameter of the timeslot counter is not 0, the RN16 signaling is not sent to the first apparatus 110, and the parameter of the timeslot counter is subtracted by 1 to obtain 0. After the second apparatus 120 receives the query repetition signaling for a second time, because the parameter of the timeslot counter is 0, the RN16 signaling is sent to the first apparatus 110.

The RN16 signaling may include a first sequence, and the first sequence may be a random sequence or a pseudo-random sequence. It should be noted that the RN16 may have another name. The first sequence may be generated by the second apparatus 120, and is not configured by the first apparatus 110 or indicated to the second apparatus 120. However, this is not limited in this application. The first sequence may also be configured by the first apparatus 110 or indicated to the second apparatus 120.

S260: The first apparatus 110 sends acknowledgment (acknowledge, ACK) signaling to the second apparatus 120. Correspondingly, the second apparatus 120 receives the acknowledgment signaling from the first apparatus 110.

The acknowledgment signaling may include first information, and the first information may include the first sequence. When the first sequence in the first information in the acknowledgment signaling is the same as the first sequence in the RN16 signaling, the second apparatus 120 is in an acknowledgement status. In the acknowledged status, the second apparatus 120 may send data to the first apparatus 110. For example, the second apparatus 120 may send, to the first apparatus 110, electronic product code (electronic product code, EPC) or uplink data for responding to a read (read) signaling or a write (write) signaling. Information bits of the foregoing data may be transmitted through an uplink physical channel (physical uplink shared channel, PUSCH). In addition, when uplink information bits are sent, check bits of the uplink information bits may be sent. For example, the check bit may be cyclic redundancy check (cyclic redundancy check, CRC) code.

S220 to S260 above may be considered as an inventory process (or referred to as a stock taking process). After the inventory process is completed, the first apparatus 110 may send the read signaling or the write signaling to the second apparatus 120, or further perform uplink and downlink information interaction with the second apparatus 120.

In addition, the method 200 may further include: The first apparatus 110 sends query adjustment (adjust) signaling to the second apparatus 120. Correspondingly, the second apparatus 120 receives the query adjustment signaling from the first apparatus 110.

The query adjustment signaling may also be referred to as paging signaling, or may be referred to as group paging signaling. The query adjustment signaling may include a query parameter, and the query parameter may enable the second apparatus 120 to re-execute S230, that is, re-determine the parameter of the timeslot counter. Specifically, after the second apparatus 120 determines the parameter of the timeslot counter based on the query signaling, if the second apparatus 120 receives the query adjustment signaling, the second apparatus 120 may determine the parameter of the new timeslot counter based on the query adjustment signaling. For example, if the query parameter in the query signaling is 10, the second apparatus 120 may extract a random number in a range from 0 to 512 as a parameter of the timeslot counter. Because a range of 0 to 512 is relatively large, the parameter of the timeslot counter determined by the second apparatus 120 is also relatively large. As a result, the first apparatus 110 needs to send a large amount of query repetition signaling to the second apparatus 120, so that the parameter of the timeslot counter can be reduced to 0, and the second apparatus 120 can perform S250, that is, initiate random access. The first apparatus 110 may carry a smaller query parameter in the query adjustment signaling, for example, the query parameter is 3. In this way, the second apparatus 120 may extract a random number in a range of 0 to 4 as a parameter of a new timeslot counter, and the parameter of the new timeslot counter is relatively small. Therefore, the first apparatus 110 may send a small amount of query repetition signaling to the second apparatus 120, the parameter of the timeslot counter can be reduced to 0, and the second apparatus 120 can perform S250, that is, initiate random access.

As described above, how to reduce scrambling complexity is a problem to be urgently resolved.

FIG. 3 is a schematic flowchart of another communication method 300 according to an embodiment of this application. The method 300 relates to interaction between a first apparatus 110 and a second apparatus 120. The method 300 can reduce scrambling complexity and can avoid data misinterpreting at a data receiving end. It should be noted that the method 300 may be combined with the method 200. In addition, the method 300 is described by using uplink transmission as an example, and the method 300 may also be similarly applicable to downlink transmission. In an uplink transmission process, in this embodiment of this application, a base station can be prevented from misinterpreting data (actually from a target tag) received by the base station as being from another tag. In a downlink transmission process, in this embodiment of this application, a target tag can be prevented from misinterpreting data (actually to be sent to another tag) received by the target tag as being sent to the target tag. The method 300 is described in detail below with reference to FIG. 3.

S310: The second apparatus 120 sends a first sequence to the first apparatus 110. Correspondingly, the first apparatus 110 receives the first sequence from the second apparatus 120.

The first sequence may be used to identify the second apparatus 120. The first sequence is used to identify the second apparatus 120. It may be understood that the first sequence is an identifier of the second apparatus 120, or the first sequence corresponds to or is associated with the second apparatus 120.

The first sequence may also be referred to as a preamble sequence used to identify the second apparatus 120, a message 1 sequence used to identify the second apparatus 120 during random access, or the like. A specific name of the first sequence is not limited in this application. The first sequence may have other names such as a scrambling sequence, a feedback sequence, and a response sequence.

The first sequence may be a random number sequence or a pseudo-random number sequence. The first sequence may be generated by the second apparatus 120, and is not configured by the first apparatus 110 or indicated to the second apparatus 120. However, this is not limited in this application. The first sequence may also be configured by the first apparatus 110 or indicated to the second apparatus 120.

S310 may be performed after the second apparatus 120 receives query signaling, query repetition signaling, or paging signaling. In other words, after the second apparatus 120 receives the query signaling, the query repetition signaling, or the paging signaling, the second apparatus 120 may send the first sequence to the first apparatus 110.

In an example, the first sequence may be carried in RN16 signaling. For details, refer to the foregoing embodiment of S250. However, a specific message carried in the first sequence is not limited in this application, and the first sequence may be carried in another signaling. In addition, a name of a message carried in the first sequence is not limited in this application. For example, the message may have another name such as a scrambling message, a feedback message, or a response message.

The first sequence may have 16 bits. In this case, the first sequence may be referred to as an RN16 sequence. For another example, the first sequence may have 8 bits. In this case, the first sequence may be referred to as an RN8 bit sequence. In other words, an RNx may be used to represent the first sequence, where x is a quantity of bits or a length of the first sequence. The length of the first sequence is not limited in this application. For example, the first sequence may further include another quantity of bits.

S320: The second apparatus 120 receives first information from the first apparatus 110. Correspondingly, the first apparatus 110 sends the first information to the second apparatus 120.

The first information may include the first sequence, and the first information may be used to determine that the first apparatus 110 successfully receives the first sequence.

S320 may be performed after the first apparatus 110 receives the first sequence. That is, after receiving the first sequence, the first apparatus 110 may send the first information including the first sequence to the second apparatus 120.

The first information may be acknowledgment signaling. For example, refer to the foregoing embodiment of S260. However, a specific form of the first information is not limited in this application, and the first information may also include another information. In addition, the first information may also have another name, for example, indication information, acknowledgment information, or response information. A specific name of the first information is not limited in this application.

In some other optional implementations, the first information may be used to indicate the first sequence, or the first information may carry the first sequence, or the first information may include the first sequence.

S330: The second apparatus 120 scrambles (scramble) to-be-sent data sequence based on the first sequence, to generate a second sequence.

The to-be-sent data sequence is data to be sent by the second apparatus 120 to the first apparatus 110. The to-be-sent data sequence may also be referred to as to-be-sent data, to-be-sent bits, to-be-sent information, a to-be-sent sequence, or the like. A specific name of the to-be-sent data sequence is not limited in this application, and is referred to as the to-be-sent data sequence only for ease of understanding. The to-be-sent data sequence may also be described by a term such as a sequence, data, information, or a bit.

The to-be-sent data sequence may be changed to the second sequence by scrambling the first sequence. In other words, the second sequence is a sequence obtained after the to-be-sent data sequence is scrambled through the first sequence. In other words, the to-be-sent data sequence is a sequence obtained before the second sequence is scrambled through the first sequence. The second sequence may also be referred to as an output sequence or an output bit sequence.

For example, when the quantity of bits of the first sequence is equal to the quantity of bits of the to-be-sent data sequence, a modulo two sum (modulo two sum) operation or an exclusive or (exclusive or, XOR) operation may be performed on the bits of the first sequence and the bits of the to-be-sent data sequence. It should be noted that, in this application, it is not limited that the first sequence needs to be equal to the quantity of bits of the to-be-sent data sequence, and scrambling can be performed only through the modulo two sum or the XOR operation. For another implementation scenario, refer to the following description. Details are not described herein again.

S340: The second apparatus 120 sends the second sequence to the first apparatus 110. Correspondingly, the first apparatus 110 receives the second sequence from the second apparatus 120.

The second sequence may be sent through a data channel. For example, the second sequence may be sent to the first apparatus 110 through a PUSCH channel.

S350: The first apparatus 110 descrambles (descramble) the second sequence based on the first sequence, to obtain a target data sequence.

For example, when the quantity of bits of the first sequence is equal to the quantity of bits of the second sequence, the modulo two sum operation or the XOR operation may be performed on the bits of the first sequence and the bits of the second sequence. It should be noted that, in this application, it is not limited that the first sequence needs to be equal to the quantity of bits of the second sequence, and scrambling can be performed only through the modulo two sum or the XOR operation. For another implementation scenario, refer to the following description. Details are not described herein again.

The descrambling in S350 is similar to the scrambling in S330. The first sequence may be used as a scrambling sequence or a descrambling sequence. The target data sequence obtained through descrambling may be the to-be-sent data sequence in S330.

In some other optional embodiments, S330 may be replaced with the following: The first apparatus 110 scrambles the to-be-sent data sequence based on the first sequence, to generate the second sequence. S340 may be replaced with the following: The first apparatus 110 sends the second sequence to the second apparatus 120. S350 may be replaced with the following: The second apparatus 120 descrambles the second sequence based on the first sequence, to obtain the target data sequence. This embodiment is an example of uplink transmission. The second sequence may be sent through a data channel. For example, the second sequence may be sent to the second apparatus 120 through a downlink physical channel (physical downlink shared channel, PDSCH).

According to the foregoing embodiments, the first sequence may be used as an identifier of the sending end in a random access scenario, or may be used to scramble the to-be-sent data sequence, and the sending end can implement data scrambling without needing additional storage space. Therefore, according to the method provided in embodiments of this application, scrambling complexity is reduced, and a receiving end can be prevented from misinterpreting data as being sent by another sending end. In another aspect, according to the foregoing embodiment, the first sequence may be used as an identifier of the sending end in a random access scenario, or may be used to scramble the received data sequence, and the receiving end can implement data descrambling without needing additional storage space. Therefore, according to the method provided in embodiments of this application, descrambling complexity is reduced, and the receiving end can be prevented from misinterpreting data as being sent by another sending end.

Optionally, in another implementation scenario of the foregoing embodiment, the to-be-sent data sequence includes an information sequence and a check sequence of the information sequence, a quantity of bits of the check sequence is N, the second sequence includes the information sequence and a third sequence, and N is a positive integer, where the third sequence is obtained by scrambling the check sequence based on N bits corresponding to the first sequence. Correspondingly, the target data sequence includes an information sequence and a check sequence of the information sequence, a quantity of bits of the check sequence is N, the second sequence includes the information sequence and a third sequence, and N is a positive integer; and the check sequence is obtained by descrambling the third sequence based on N bits corresponding to the first sequence.

The information sequence may be a payload (payload) bit or a payload bit sequence of the data channel, and the information sequence may also be referred to as an information bit or an information bit sequence. The check sequence may be a check bit of the data channel, or referred to as a parity check bit of a data channel, or referred to as a check bit of a payload bit, or referred to as a parity check bit of a payload bit. For example, the check sequence may include a CRC bit. The check sequence may also be referred to as a CRC bit sequence, a check bit sequence, or a parity check bit sequence. It should be noted that a specific name of the information sequence and the check sequence is not limited in this application, and the information sequence and the check sequence may have other names.

The foregoing solution may be understood as that the first sequence scrambles all bits of the check sequence, but does not scramble bits of the information sequence. A sequence obtained after the check sequence is scrambled may be referred to as a third sequence. In other words, the foregoing solution may be understood as that the first sequence scrambles all bits of the CRC, but does not scramble the information bits. It should be noted that the third sequence may have another name, for example, a scrambling information sequence. A name of the third sequence is not limited in this application.

For a specific example of the N bits corresponding to the first sequence, refer to the following. Details are not described herein again.

According to the foregoing embodiment, the sending end may scramble only the to-be-sent check sequence based on the first sequence. Therefore, the method provided in embodiments of this application has low scrambling complexity, and the receiving end can be prevented from misinterpreting data as being sent by another sending end. In another aspect, according to the foregoing embodiment, the receiving end may descramble the received sequence based on the first sequence, to obtain the check sequence. Therefore, the method provided in embodiments of this application has low descrambling complexity, and the receiving end can be prevented from misinterpreting data as being sent by another sending end.

Optionally, in another implementation scenario of the foregoing embodiment, a quantity of bits of the to-be-sent data sequence is N, and N is a positive integer; and the second sequence is obtained by scrambling the to-be-sent data sequence based on N bits corresponding to the first sequence. Correspondingly, a quantity of bits of the target data sequence is N, and N is a positive integer; and the target data sequence is obtained by descrambling the second sequence based on N bits corresponding to the first sequence.

The foregoing solution may be understood as that all bits of the to-be-sent data sequence are scrambled through the first sequence, that is, both the information sequence and the check sequence are scrambled, or the payload sequence and the CRC sequence are scrambled together. For a specific example of the N bits corresponding to the first sequence, refer to the following. Details are not described herein again.

According to the foregoing embodiment, the sending end may scramble all the to-be-sent data sequences based on the first sequence, which complies with a data channel scrambling mechanism specified in a current protocol, and improves applicability of the method in embodiments of this application. In addition, the method provided in embodiments of this application has a good scrambling effect, and the receiving end can be further prevented from misinterpreting data as being sent by another sending end. In another aspect, according to the foregoing embodiment, the receiving end may descramble the received sequence based on the first sequence, to obtain the target data sequence. Therefore, the method provided in embodiments of this application has a good descrambling effect, and the receiving end can be further prevented from misinterpreting data as being sent by another sending end.

Optionally, in another implementation scenario of the foregoing embodiment, the N bits corresponding to the first sequence include first N bits of the first sequence, last N bits of the first sequence, first N bits of a sequence obtained after a plurality of first sequences are cascaded, or last N bits of the sequence obtained after the plurality of first sequences are cascaded. Correspondingly, the N bits corresponding to the first sequence include first N bits of the first sequence, last N bits of the first sequence, first N bits of a sequence obtained after a plurality of first sequences are cascaded, or last N bits of the sequence obtained after the plurality of first sequences are cascaded.

For ease of description, it is assumed that the first sequence has M bits, and the first sequence may be represented by r, for example, r₀, r₁, r₂, ..., and r_{M-1}. It is assumed that the check sequence has Y bits, and the check sequence may be represented by p, for example, p₀, p₁, p₂, ..., and p_{Y-1}. It is assumed that the information sequence has Z bits, and the information sequence may be represented by a, for example, a₀, a₁, a₂, ..., and a_{z-1}. It is assumed that the to-be-sent data sequence or the target data sequence may be represented by b, for example, ${b}_{k} = {a}_{k} , k = 0 , 1 , 2 , … , Z - 1 ;$ ${b}_{k} = {p}_{k - Z} , k = Z , Z + 1 , Z + 2 , … , Z + Y - 1 .$

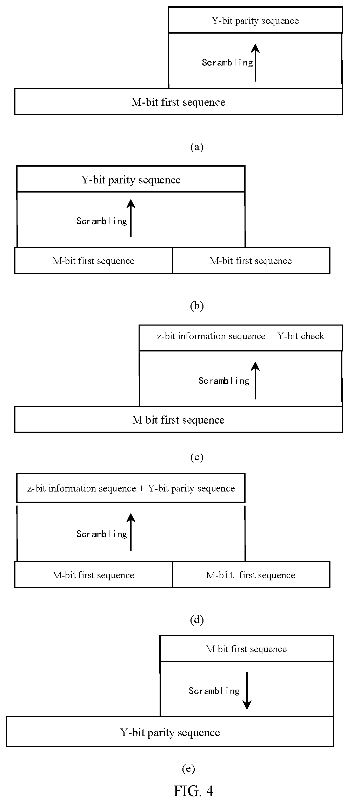

FIG. 4 is a diagram of data scrambling according to an embodiment of this application.

In some examples, a first sequence scrambles only a check sequence to generate a third sequence, and does not scramble an information sequence.

When M is greater than or equal to Y, first Y bits, last Y bits (for example, refer to (a) in FIG. 4) or middle Y bits of the first sequence may be used as N bits corresponding to the first sequence. For example, if M is 8 and Y is 6, the N bits corresponding to the first sequence may be first 6 bits, last 6 bits, or middle 6 bits of the first sequence.

For example, it is assumed that the second sequence may be represented by c, and a scrambling manner is modulo two sum. If the N bits corresponding to the first sequence are the first Y bits of the first sequence, the second sequence may be: ${c}_{k} = {b}_{k} , k = 0 , 1 , 2 , … , Z - 1 ;$ ${c}_{k} = \left({b}_{k}+{r}_{k - Z}\right) mod 2 , k = Z , Z + 1 , Z + 2 , … , Z + Y - 1 .$

If the N bits corresponding to the first sequence are the last Y bits of the first sequence, the second sequence may be: ${c}_{k} = {b}_{k} , k = 0 , 1 , 2 , … , Z - 1 ;$ ${c}_{k} = \left({b}_{k}+{r}_{k - Z + M - Y}\right) mod 2 , k = Z , Z + 1 , Z + 2 , … , Z + Y - 1 .$

When M is less than or equal to Y, the first sequence may be cascaded (cascade) for a plurality of times, and first Y bits, last Y bits, or middle Y bits (for example, refer to (b) in FIG. 4) of the cascaded sequence are used as the N bits corresponding to the first sequence. For example, if M is 8 and Y is 16, the N bits corresponding to the first sequence may be 16 bits of a sequence obtained after the first sequence is cascaded for 2 times. For another example, if M is 8 and Y is 20, the N bits corresponding to the first sequence may be first 20 bits, last 20 bits, or middle 20 bits of the sequence obtained after the first sequence is cascaded for 3 times.

That the first sequence is cascaded for a plurality of times may also be understood as that the first sequence is repeated (repeat) for a plurality of times and then is concatenated (concatenate). A quantity of times that the first sequence is cascaded may be $\left⌈Y/M\right⌉$ times, or may be an integer times greater than $\left⌈Y/M\right⌉$." $\left⌈Y/M\right⌉$" represents a value obtained after Y is divided by M and rounded up (or referred to as rounding up). A sequence obtained after a plurality of first sequences are cascaded may also be referred to as a scrambling code sequence. However, it should be noted that a name of the cascaded sequence is not limited in this application, and the sequence may have another name, for example, a cascaded sequence, a repeated sequence, or a concatenated sequence.

For example, it is assumed that the second sequence may be represented by c, the scrambling manner is modulo two sum, and the N bits corresponding to the first sequence are the first Y bits of the sequence obtained after the first sequence is cascaded. The cascaded first sequence is represented by r', and the second sequence may be: ${c}_{k} = {b}_{k} , k = 0 , 1 , 2 , … , Z - 1 ;$ ${c}_{k} = \left({b}_{k}+r{′}_{k - Z}\right) mod 2 , k = Z , Z + 1 , Z + 2 , … , Z + Y - 1 .$

In some other examples, the first sequence scrambles the check sequence and the information sequence, to generate the second sequence.

When M is greater than or equal to Y+Z, first Y+Z bits, last Y+Z bits (for example, refer to (c) in FIG. 4) or middle Y+Z bits of the first sequence may be used as the N bits corresponding to the first sequence. For example, if M is 32, Y is 6, and Z is 16, Y+Z is 22, and the N bits corresponding to the first sequence may be first 22 bits, last 22 bits, or middle 22 bits of the first sequence.

For example, it is assumed that the second sequence may be represented by c, and the scrambling manner is modulo two sum. If the N bits corresponding to the first sequence are the first Y+Z bits of the first sequence, the second sequence may be: ${c}_{k} = \left({b}_{k}+{r}_{k}\right) mod 2 , k = 0 , 1 , 2 , … , Z + Y - 1 .$

When M is less than or equal to Y+Z, the first sequence may be cascaded for a plurality of times, and first Y+Z bits, last Y bits, or middle Y bits (for example, refer to (d) in FIG. 4) of the cascaded sequence are used as the N bits corresponding to the first sequence. For example, if M is 8, Y is 24, and Z is 128, Y+Z is 152, and the N bits corresponding to the first sequence may be 152 bits of a sequence obtained after the first sequence is cascaded for 19 times. For example, if M is 8, Y is 24, and Z is 132, Y+Z is 156, and the N bits corresponding to the first sequence may be first 156 bits, last 156 bits, or middle 156 bits of the sequence obtained after the first sequence is cascaded for 20 times.

A quantity of times that the first sequence is cascaded may be $\left⌈\left(Y+Z\right)/M\right⌉$ times, or may be an integer times greater than $\left⌈\left(Y+Z\right)/M\right⌉$. " $\left⌈\left(Y+Z\right)/M\right⌉$" represents a value obtained after Y+Z is divided by M and rounded up (or referred to as rounding up). A sequence obtained after a plurality of first sequences are cascaded may also be referred to as a scrambling code sequence. However, it should be noted that a name of the cascaded sequence is not limited in this application, and the sequence may have another name, for example, a cascaded sequence, a repeated sequence, or a concatenated sequence.

For example, it is assumed that the second sequence may be represented by c, the scrambling manner is modulo two sum, and the N bits corresponding to the first sequence are the first Y+Z bits of the sequence obtained after the first sequence is cascaded. The cascaded first sequence is represented by r', and the second sequence may be: ${c}_{k} = \left({b}_{k}+r{′}_{k}\right) mod 2 , k = 0 , 1 , 2 , … , Z + Y - 1 .$

According to the foregoing embodiment, the sending end may scramble all the to-be-sent data sequences or all the check sequences based on the first sequence. Therefore, the method provided in embodiments of this application has a good scrambling effect, and the receiving end can be further prevented from misinterpreting data as being sent by another sending end. In another aspect, according to the foregoing embodiment, the receiving end may descramble the received sequence based on the first sequence, to obtain the target data sequence or the check sequence. Therefore, the method provided in embodiments of this application has a good descrambling effect, and the receiving end can be further prevented from misinterpreting data as being sent by another sending end.

In some optional implementations, the method 300 further includes: A second apparatus 120 sends second information to the first apparatus 110, where the second information is used to indicate that the N bits corresponding to the first sequence include first N bits of the first sequence, last N bits of the first sequence, first N bits of a sequence obtained after a plurality of first sequences are cascaded, or last N bits of the sequence obtained after the plurality of first sequences are cascaded. Correspondingly, the first apparatus 110 receives the second information from the second apparatus 120. It may be understood that the second information may indicate a scrambling manner of the first sequence. Further, the second information may be further used to instruct the first sequence to scramble all to-be-sent data sequences or all check sequences. The foregoing second information may also be used to indicate a descrambling manner. For example, the second information may be further used to instruct the first sequence to descramble all to-be-sent data sequences or all check sequences.

Optionally, in another implementation scenario of the foregoing embodiment, the to-be-sent data sequence includes an information sequence and a check sequence of the information sequence, a quantity of bits of the first sequence is M, a quantity of bits of the check sequence is greater than or equal to M, the second sequence includes the information sequence and a third sequence, and M is a positive integer; and the third sequence is obtained by scrambling M bits in the check sequence based on M bits of the first sequence. Correspondingly, the target data sequence includes an information sequence and a check sequence of the information sequence, a quantity of bits of the first sequence is M, a quantity of bits of the check sequence is greater than or equal to M, the second sequence includes the information sequence and a third sequence, and M is a positive integer, where the check sequence is obtained by descrambling M bits in the third sequence based on M bits of the first sequence.

The foregoing solution may be understood as that the first sequence scrambles some bits of the check sequence. The first sequence may scramble first M bits, last M bits (for example, refer to (e) in FIG. 4) or middle M bits of the check sequence. For example, if M is 8 and Y is 16, the first sequence may scramble first 8 bits, last 8 bits, or middle 8 bits of the check sequence.

For example, it is assumed that the second sequence may be represented by c, and the scrambling manner is modulo two sum. If the last M bits of the check sequence are scrambled based on the first sequence, the second sequence may be: ${c}_{k} = {b}_{k} , k = 0 , 1 , 2 , … , Z + Y - M - 1 ;$ ${c}_{k} = \left({b}_{k}+{r}_{k - Z - Y + M}\right) mod 2 , k = Z + Y - M , … , Z + Y - 1 .$

According to the foregoing embodiment, the sending end may scramble some bits of the check sequence based on the first sequence, scrambling complexity is further reduced, and the receiving end can be prevented from misinterpreting data as being sent by another sending end. In another aspect, according to the foregoing embodiment, the receiving end may descramble the received sequence based on the first sequence, to obtain the check sequence. The method provided in embodiments of this application has low descrambling complexity, and the receiving end can be prevented from misinterpreting data as being sent by another sending end.

Optionally, in another implementation scenario of the foregoing embodiment, a quantity of bits of the first sequence is M, the second sequence is obtained by respectively scrambling M subsequences based on M bits of the first sequence, the to-be-sent data sequence is divided into the M subsequences, and when an m^{th} bit in the M bits is 0, a NOT operation is performed on bits of an m^{th} subsequence in the M subsequences, M is a positive integer, and m=1, ..., M. Correspondingly, a quantity of bits of the first sequence is M, the target data sequence is obtained by respectively descrambling M subsequences based on M bits of the first sequence, the second sequence is divided into the M subsequences, and when an m^{th} bit in the M bits is 0, a NOT operation is performed on bits of an m^{th} subsequence in the M subsequences, M is a positive integer, and m=1, ..., M.

The foregoing solution may be understood as that Y+Z bits are divided into M sub-blocks (or referred to as M subsequences), and each sub-block uses one bit in the M bits as a mask, or in other words, the bit is used as an index of the sub-block for masking (mask). When the mask is 1, the bits in the sub-block remain unchanged, and when the mask is 0, the NOT operation is performed on bits of the sub-block. The "NOT operation" means that a bit that is originally 0 is set to 1, and a bit that is originally 1 is set to 0.

That the to-be-sent data sequence is divided into M subsequences may also be understood as that the to-be-sent data sequence includes M subsequences, or the M subsequences form the to-be-sent data sequence, or the to-be-sent data sequence includes M subsequences. Correspondingly, the second sequence may also be divided into M subsequences. It should be understood that the M subsequences in the second sequence correspond to the M subsequences in the to-be-sent data sequence. "Corresponding" is represented as that bit values of the m^{th} subsequence in the second sequence are opposite to bit values of the m^{th} subsequence in the to-be-sent data sequence. For example, a 3^{rd} subsequence in the second sequence is "1100", and a 3^{rd} subsequence in the to-be-sent data sequence is "0011".

For example, if M is 8, Y is 24, and Z is 128, Y+Z is 152, the to-be-sent data sequence may be divided into 8 subsequences, and each subsequence has 19 bits. For ease of description, the 8 subsequences are sequentially numbered #0, #1, ..., and #7. Assuming that the first sequence is "11001010", the NOT operation may be performed on bits in subsequences numbered #2, #3, #5, and #7, and bits in other subsequences remain unchanged.

In some other optional implementations, when the m^{th} bit in the M bits is 1, the NOT operation may be performed on bits of the m^{th} subsequence in the M subsequences. When the m^{th} bit in the M bits is 0, bits of the m^{th} subsequence in the M subsequences remain unchanged.

It should be noted that the to-be-sent data sequence may be evenly divided into M subsequences, or may be unevenly divided into M subsequences. In other words, the M subsequences may have same bits, or may have different bits.

According to the foregoing embodiment, the sending end may scramble all the to-be-sent data sequences based on the first sequence, which complies with a data channel scrambling mechanism specified in a current protocol, and improves applicability of the method in embodiments of this application. In addition, according to the method provided in embodiments of this application, to-be-sent data sequences of various lengths can be quickly scrambled, which has a good scrambling effect, and the receiving end can be further prevented from misinterpreting data as being sent by another sending end. In another aspect, according to the foregoing embodiment, the receiving end may descramble the received sequence based on the first sequence, to obtain the target data sequence. The method provided in embodiments of this application has a good descrambling effect, and the receiving end can be further prevented from misinterpreting data as being sent by another sending end.

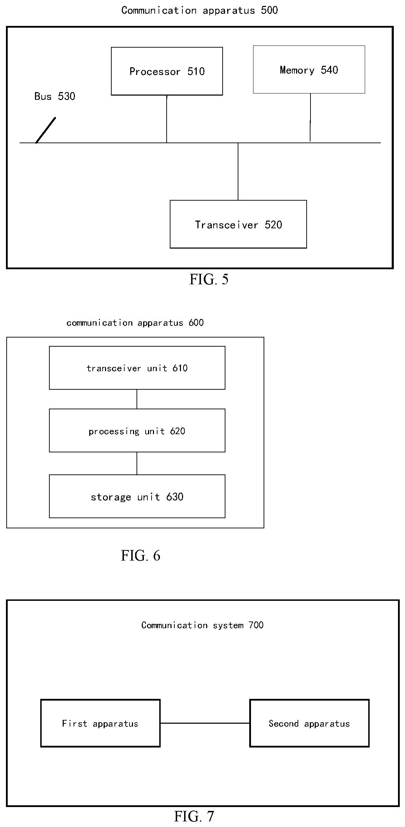

FIG. 5 is a block diagram of a communication apparatus 500 according to an embodiment of this application. The communication apparatus 500 includes a processor 510 and a transceiver 520. The processor 510 and the transceiver 520 may be connected to each other through a bus 530. The communication apparatus 500 may be a first apparatus, or may be a second apparatus.

Optionally, the communication apparatus 500 may further include a memory 540. The memory 540 includes but is not limited to a random access memory (random access memory, RAM), a read-only memory (read-only memory, ROM), an erasable programmable read-only memory (erasable programmable read only memory, EPROM), or a portable read-only memory (compact disc read-only memory, CD-ROM). The memory 540 is configured to store related instructions and data.

The processor 510 may be one or more central processing units (central processing unit, CPU). When the processor 510 is one CPU, the CPU may be a single-core CPU or a multi-core CPU. The processor 510 may be a signal processor, a chip, or another integrated circuit that can implement the method in this application, or a part of a circuit that is in the foregoing processor, chip, or integrated circuit and that is configured to perform a processing function. In addition, the transceiver 520 may also be referred to as an input/output interface or a communication interface. The transceiver 520 is configured to input or output a signal or data, or may be an input/output circuit.

When the communication apparatus 500 is the second apparatus, for example, the communication apparatus 500 includes the processor 510 and the transceiver 520. The transceiver 520 is configured to send a first sequence to a first apparatus, where the first sequence is used to identify a second apparatus, and the second apparatus is a sending end of the first sequence; and is configured to receive first information from the first apparatus, where the first information includes the first sequence, and the first information is used to determine that the first apparatus successfully receives the first sequence. The processor 510 is configured to scramble a to-be-sent data sequence based on the first sequence, to generate a second sequence. The transceiver 520 is further configured to send the second sequence to the first apparatus.

When the communication apparatus 500 is the first apparatus, for example, the communication apparatus 500 includes the processor 510 and the transceiver 520. The transceiver 520 is configured to receive a first sequence from a second apparatus, where the first sequence is used to identify the second apparatus; and is configured to send first information to the second apparatus, where the first information includes the first sequence, and the first information is used to determine that the first apparatus successfully receives the first sequence; and is configured to receive a second sequence from the second apparatus. The processor 510 is configured to descramble the second sequence based on the first sequence, to obtain a target data sequence.

The foregoing descriptions are merely examples for description. For specific content, refer to the content shown in the foregoing method embodiments. For implementation of each operation in FIG. 5, refer to corresponding descriptions of the method embodiments shown in FIG. 2 to FIG. 4.

FIG. 6 is a block diagram of another communication apparatus 600 according to an embodiment of this application. The communication apparatus 600 may be a first apparatus or a second apparatus, or may be a chip or a module in the first apparatus or the second apparatus, and is configured to implement the methods involved in the foregoing embodiments. The communication apparatus 600 includes a transceiver unit 610. For example, the transceiver unit 610 is described below.

The transceiver unit 610 may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. A unified description is provided herein. Details are not described below again.

When the communication apparatus 600 is the second apparatus, for example, the transceiver unit 610 is configured to send a first sequence to the first apparatus.

Optionally, the communication apparatus 600 may further include a processing unit 620, which is configured to perform content related to steps such as processing and coordination of the first apparatus.

When the communication apparatus 600 is the first apparatus, for example, the transceiver unit 610 is configured to receive the first sequence from the first apparatus.

Optionally, the communication apparatus 600 may further include a processing unit 620, which is configured to perform content related to steps such as processing and coordination of the second apparatus.

The foregoing content is merely used as an example for description. When the communication apparatus 600 is the first apparatus or the second apparatus, the communication apparatus is responsible for performing the methods or the steps related to the first apparatus or the second apparatus in the foregoing method embodiments.

Optionally, the communication apparatus 600 further includes a storage unit 630. The storage unit 630 is configured to store a program or code used to perform the foregoing method.

The apparatus embodiments shown in FIG. 5 and FIG. 6 are used to implement embodiments in FIG. 2 to FIG. 4. For specific execution steps and methods of the apparatuses shown in FIG. 5 and FIG. 6, refer to the content described in the foregoing method embodiments.

FIG. 7 is a block diagram of a communication system 700 according to an embodiment of this application. The communication system 700 includes a first apparatus and a second apparatus. The first apparatus and the second apparatus are configured to implement the foregoing embodiments in FIG. 2 to FIG. 4.

This application further provides a chip. The chip includes a processor, configured to invoke instructions from a memory and run the instructions stored in the memory, to cause a communication apparatus on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes a memory. The memory is configured to store a computer program or the code.

This application further provides a processor, configured to be coupled to a memory, and configured to perform the method and the function that are related to the first apparatus or the second apparatus in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiment is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes: various media that can store program code, such as a USB flash drive, a removable hard disk, a read only memory (read only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first sequence to a first apparatus, wherein the first sequence is used to identify a second apparatus, and the second apparatus is a sending end of the first sequence;
receiving first information from the first apparatus, wherein the first information comprises the first sequence, and the first information is used to determine that the first apparatus successfully receives the first sequence;
scrambling a to-be-sent data sequence based on the first sequence, to generate a second sequence; and
sending the second sequence to the first apparatus.

2. The method according to claim 1, wherein the to-be-sent data sequence comprises an information sequence and a check sequence of the information sequence, a quantity of bits of the check sequence is N, the second sequence comprises the information sequence and a third sequence, and N is a positive integer, wherein
the third sequence is obtained by scrambling the check sequence based on N bits corresponding to the first sequence.

3. The method according to claim 1, wherein a quantity of bits of the to-be-sent data sequence is N, and N is a positive integer; and
the second sequence is obtained by scrambling the to-be-sent data sequence based on N bits corresponding to the first sequence.

4. The method according to claim 2 or 3, wherein the N bits corresponding to the first sequence comprise first N bits of the first sequence, last N bits of the first sequence, first N bits of a sequence obtained after a plurality of first sequences are cascaded, or last N bits of the sequence obtained after the plurality of first sequences are cascaded.

5. The method according to claim 1, wherein the to-be-sent data sequence comprises an information sequence and a check sequence of the information sequence, a quantity of bits of the first sequence is M, a quantity of bits of the check sequence is greater than or equal to M, the second sequence comprises the information sequence and a third sequence, and M is a positive integer; and
the third sequence is obtained by scrambling M bits in the check sequence based on M bits of the first sequence.

6. The method according to claim 1, wherein a quantity of bits of the first sequence is M, and
the second sequence is obtained by respectively scrambling M subsequences based on M bits of the first sequence, the to-be-sent data sequence is divided into the M subsequences, and when an m^{th} bit in the M bits is 0, a NOT operation is performed on bits of an m^{th} subsequence in the M subsequences, M is a positive integer, and m=1, ..., M.

7. A communication method, comprising:
receiving a first sequence from a second apparatus, wherein the first sequence is used to identify the second apparatus;
sending first information to the second apparatus, wherein the first information comprises the first sequence, and the first information is used to determine that a first apparatus successfully receives the first sequence;
receiving a second sequence from the second apparatus; and
descrambling the second sequence based on the first sequence, to obtain a target data sequence.

8. The method according to claim 7, wherein the target data sequence comprises an information sequence and a check sequence of the information sequence, a quantity of bits of the check sequence is N, the second sequence comprises the information sequence and a third sequence, and N is a positive integer; and
the check sequence is obtained by descrambling the third sequence based on N bits corresponding to the first sequence.

9. The method according to claim 7, wherein a quantity of bits of the target data sequence is N, and N is a positive integer; and
the target data sequence is obtained by descrambling the second sequence based on N bits corresponding to the first sequence.

10. The method according to claim 8 or 9, wherein the N bits corresponding to the first sequence comprise first N bits of the first sequence, last N bits of the first sequence, first N bits of a sequence obtained after a plurality of first sequences are cascaded, or last N bits of the sequence obtained after the plurality of first sequences are cascaded.

11. The method according to claim 7, wherein the target data sequence comprises an information sequence and a check sequence of the information sequence, a quantity of bits of the first sequence is M, a quantity of bits of the check sequence is greater than or equal to M, the second sequence comprises the information sequence and a third sequence, and M is a positive integer, wherein
the check sequence is obtained by descrambling M bits in the third sequence based on M bits of the first sequence.

12. The method according to claim 7, wherein a quantity of bits of the first sequence is M, and
the target data sequence is obtained by respectively descrambling M subsequences based on M bits of the first sequence, the second sequence is divided into the M subsequences, and when an m^{th} bit in the M bits is 0, a NOT operation is performed on bits of an m^{th} subsequence in the M subsequences, M is a positive integer, and m=1, ..., M.

13. A communication apparatus, comprising at least one module, wherein the at least one module is configured to perform the method according to any one of claims 1 to 6, or the at least one module is configured to perform the method according to any one of claims 7 to 12.

14. A communication system, comprising a first apparatus and a second apparatus, wherein the first apparatus is configured to perform the method according to any one of claims 7 to 12, and the second apparatus is configured to perform the method according to any one of claims 1 to 6.

15. A communication apparatus, comprising a processing circuit and an input/output interface, wherein the input/output interface is configured to input and/or output a signal, the processing circuit is configured to perform the method according to any one of claims 1 to 6, or the processing circuit is configured to perform the method according to any one of claims 7 to 12.

16. A computer-readable storage medium, wherein the computer-readable storage medium stores a computer program or instructions, and when the computer program or the instructions are run on a computer, the method according to any one of claims 1 to 6 is performed, or the method according to any one of claims 7 to 12 is performed.

17. A communication method, comprising:
performing, by a second apparatus, the method according to any one of claims 1 to 6; and
performing, by a first apparatus, the method according to any one of claims 7 to 12.
